Europäisches Patentamt

European Patent Office

Office européen des brevets

(11) Publication number: **0 064 395**
**B1**

(12) **EUROPEAN PATENT SPECIFICATION**

(45) Date of publication of patent specification: **11.06.86**

(21) Application number: **82302217.3**

(22) Date of filing: **29.04.82**

(51) Int. Cl.⁴: **G 11 B 7/08,** G 11 B 21/08,
G 11 B 21/10 // G11B7/00

(54) Apparatus for reproducing an audio disc.

(30) Priority: **30.04.81 JP 65656/81**

(43) Date of publication of application:
**10.11.82 Bulletin 82/45**

(45) Publication of the grant of the patent:
**11.06.86 Bulletin 86/24**

(84) Designated Contracting States:
**AT DE FR GB IT NL SE**

(56) References cited:
DE-A-2 344 125
DE-A-2 850 363
FR-A-2 444 314
FR-A-2 456 363
GB-A-2 034 080
IEEE SPECTRUM, vol. 16, no. 12, December
1979, pages 28-32, New York (USA); R.
BERNHARD: "Higher fi by digits"

JOURNAL OF THE AUDIO ENGINEERING
SOCIETY, vol. 29, no. 1/2, January/February
1981, pages 60-66, New York (USA); T.T.DOI:
"General information on a compact digital
audio disk"

(73) Proprietor: **SONY CORPORATION**
7-35 Kitashinagawa 6-Chome Shinagawa-ku
Tokyo 141 (JP)

(72) Inventor: **Hamada, Yuichiro**
3-16-13 Amanuma Suginami-ku
Tokyo (JP)
Inventor: **Fujiie, Kazuhiko**
1-16-12 Okusawa Setagaya-ku
Tokyo (JP)
Inventor: **Ohtawa, Masanori**
4-8-7 Takatori Shonan
Yokohama-shi Kanagawa-ken (JP)
Inventor: **Nonaka, Chiaki**
312-3-7-713 Imai-cho Hodogaya-ku
Yokohama-shi Kanagawa-ken (JP)
Inventor: **Yoshida, Tadao**
72-1-716 Takaishi Tama-ku
Kawasaki-shi Kanagawa-ken (JP)
Inventor: **Haneda, Yoshiaki**
1-27-21, Sakura Setagaya-ku
Tokyo (JP)

(74) Representative: **Thomas, Christopher Hugo**
et al
D Young & Co 10 Staple Inn
London WC1V 7RD (GB)

## Description

This invention relates to apparatus for reproducing an audio disc.

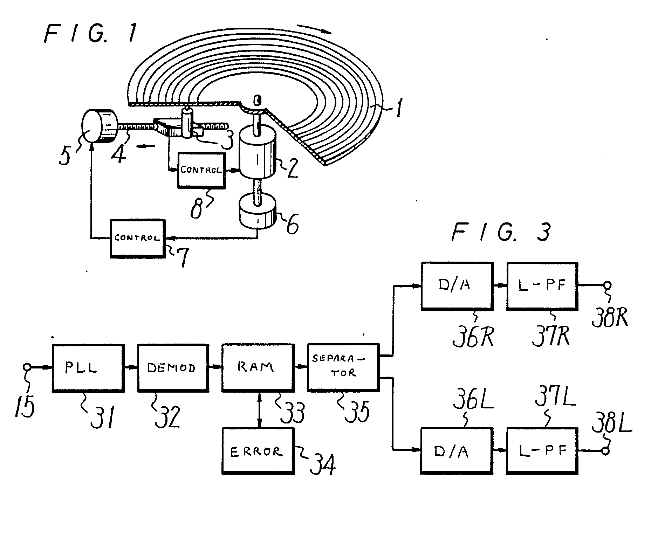

To reproduce a compact digital audio disc (DAD) a disc player apparatus as shown in Figure 1 of the accompanying drawings can be used. A DAD 1 is rotated by a spindle motor 2 in the counter-clockwise direction viewed from the underside of the DAD 1. A pick-up device 3 is located facing the underside of the DAD 1 and is moved radially, usually from the centre of the DAD 1 to its outer periphery, as the DAD 1 the rotated, by a mechanism comprising a worm gear 4 and a motor 5 for rotating the gear 4, to scan or trace a spiral or a series of circular tracks in which audio information is recorded as a series of pits. A detecting device 6 is provided for detecting the rotational speed of the motor 2. The signal from the detecting device 6 is supplied to a control circuit 7 for the motor 5, whereby the motor 5 is rotated by a predetermined amount for each revolution of the DAD 1. A signal indicating the position of the pick-up device 3 is also supplied to a control circuit 8 for the motor 2 thereby to control the motor 2 such that the DAD 1 is rotated at a constant linear velocity.

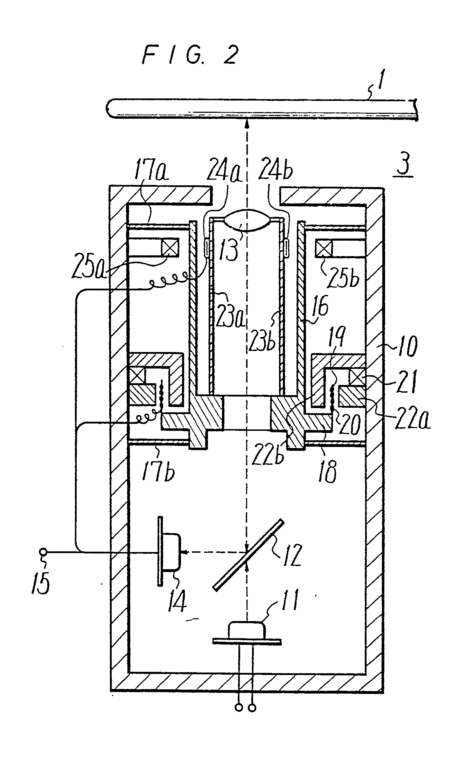

Figure 2 of the accompanying drawings is a mainly cross-sectional diagram showing the construction of the pick-up device 3. In this case, within an outer casing 10 is provided a laser light source 11 such as, for example, a semiconductor laser. The laser light beam emitted from the light source 11 passes through a beam splitter 12 to an objective lens 13. The light beam passed through the lens 13 impinges as a focussed light beam spot on the information surface of the DAD 1. The reflected light beam from the DAD 1 again passes through the lens 13 to the beam splitter 12, where it is reflected and passes to a photo-detector 14. The signal from the photo-detector 14 is supplied to an output terminal 15. In addition, the photo-detector 14 forms a focusing servo control signal and a tracking servo control signal which will be described later.

The upper and lower ends of a mirror cylinder 16 are respectively coupled to the casing 10 of the pick-up device 3 via springs 17a and 17b, whereby the mirror cylinder 16 can be moved upwards and downwards. A flange 18 is provided at the lower portion of the mirror cylinder 16, which is provided with a cylindrical bobbin 19 coaxial with the mirror cylinder 16. Around the periphery of the bobbin 19 is wound a focusing servo coil 20 so as to surround the bobbin 19.

An annular magnet 21 is attached to the casing 10, and the poles of the magnet 21 are respectively connected to yokes 22a and 22b which are each made of magnetic material. The yokes 22a and 22b respectively extend to be located near the outer and inner peripheries of the coil 20.

Within the mirror cylinder 16 are provided two plate or leaf springs 23a and 23b which extend parallel to each other from the lower end of the mirror cylinder 16 to the upper end, and the lens 13 is supported between the free ends (the upper ends) of the leaf springs 23a and 23b. Near the upper ends of the leaf springs 23a and 23b are provided tracking servo coils 24a and 24b which are respectively wound in the extending direction of the leaf springs 23a and 23b, that is, in the vertical direction.

Also, within the casing 10, there are provided magnets 25a and 25b at positions opposing the tracking servo coils 24a and 24b through the mirror cylinder 16.

With the pick-up device 3, when a current flows in the focusing servo coil 20, the mirror cylinder 16 is moved vertically in dependence on the magnitude of the current. Whereas, when a current flows in the tracking servo coils 24a and 24b, the leaf springs 23a and 23b are moved to the right or left, that is horizontally, in dependence on the magnitude of the current.

Thus, if the focusing servo control signal mentioned above is supplied to the focusing servo coil 20, focusing servo is carried out in which the light beam emitted from the light source. 11 through the lens 13 to the DAD 1 is correctly focused thereon. Also, if the tracking servo control signal is supplied to the tracking servo coils 24a and 24b, tracking servo is performed in which a series of information pits or bumps on the DAD 1 is made coincident with the optical axis of the lens 13.

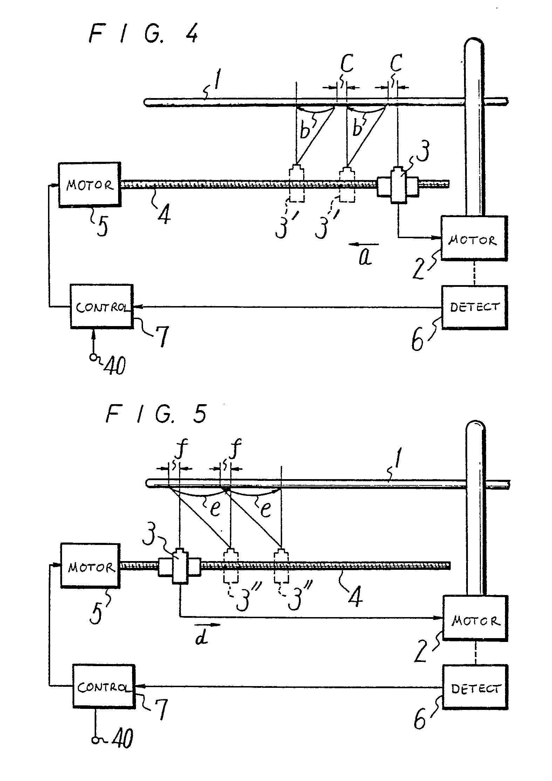

Figure 3 of the accompanying drawings shows in block form a demodulating circuit for the reproduced signal. The signal derived from the output terminal 15 of Figure 2 is supplied to a phase-locked loop (PLL) circuit 31 in which the phase fluctuation component of the reproduced signal is removed. The signal from the PLL circuit 31 is supplied to a demodulator 32 where a digital signal is generated. This digital signal from the demodulator 32 is supplied to a random access memory (RAM) 33 and memorized therein. Then, errors are corrected by an error correction circuit 34. The signal thus error-corrected from the RAM 33 is supplied to a left and right-channel signal separation circuit 35 in which the left channel signal and the right channel signal are separated. The separated signals are respectively supplied to digital-to-analog (D/A) conversion circuits 36R and 36L and the signals thus D/A-converted are respectively supplied through low-pass filters 37R and 37L to output terminals 38R and 38L.

With such a DAD 1, reproduction of even one surface takes a very long time, for example, more than sixty minutes. Moreover, on reproduction, the user does not always want to hear all that is recorded on the DAD 1 and may only want a selected part.

There is thus a need for an audio disc reproducing apparatus so designed that the user can intelligibly monitor at will the information recorded on a disc at a speed faster than the normal reproduction speed, for example to find a particular item of material on the disc.

GB—A—2 055 237 discloses "random access" and "live search" systems for video disc reproduction systems in which a reproducing stylus is shifted at high speed. The random access system can shift the stylus to a desired position, but has the disadvantages that it relies on address signals recorded on all track turns of the disc and that the reproducing apparatus tends to become correspondingly complex and expensive. The live search system does not require address signals and therefore also does not necessitate the expense and complexity of incorporation in the reproducing apparatus of means for attaining coincidence with address signals. However, it is necessary to keep a tracking servo system operative to exercise control of the stylus. If the stylus and reproducing transducer are shifted at high speed, the stylus undergoes tracking control up to the elastic deformation limit of components such as the cantilever holding the stylus and will maintain a state of tracing one track turn. When the elastic deformation limit is exceeded, the parts are restored to a relaxed state. As a result, the stylus skips several track turns. This process is repeated so that only non-adjacent portions of the recorded video information are reproduced. The above-mentioned deformation can cause damage. Also, since the movements of a reproduced image become intermittent, it is impossible to determine accurately and positively the recorded position of a specifically desired information content.

GB—A—2 037 460 discloses a video disc reproduction system in which a servo control loop or tracking adjustment means locks a scanning spot of an optical read unit or scanning means to a track of the disc as the read unit moves radially by providing a radial movement in an opposite sense. The servo control loop is rendered inoperative when a deflection element of the servo control loop attains a maximum deflection so that tracing ceases. The loop is thereafter again rendered operative so that the scanning spot again locks on to the track. Thus, in searching for a specific video programme section, the recorded information is intermittently reproduced over non-adjacent portions and other portions of the information are skipped.

GB—A—2 011 651 discloses another video disc reproducing system. The system is of the random access type, employing address signals recorded on the disc together with video information signals to enable pick-up means to be moved at high speed to a desired position on the disc. The pick-up employs scanning means of electrostatic capacitance type, though it is stated that an optical scanning means or transducer could be employed. The random access type of system and its disadvantages are mentioned above in the discussion of GB—A—2 055 237.

DE—A1—2 344 125 discloses an audio disc reproducing apparatus. More specifically, DE—A1—2 344 125 discloses apparatus for reproducing information recorded on a rotatable disc in the form of a spiral track, the apparatus comprising driving means for rotating the disc, pick-up means including scanning means for scanning a track on the disc as the disc rotates so as to reproduce the recorded information, transporting means for moving the pick-up means radially of the disc, in a normal reproduction mode, to allow the scanning means continuously to scan a track on the disc as the disc rotates, and jump control means operative in another reproduction mode to move the pick-up means in either sense radially of the disc so as to jump from one turn of track to another turn of the track so as to reproduce sequentially only non-adjacent portions of the recorded information. The spiral track is in the form of a groove and the pick-up means comprises a scanning member in the form of a needle (stylus). The jump control means is an electromagnetic arrangement separate from the transporting means and operates by applying impulses to the needle to nudge it into an adjacent groove, in either direction. The object is to enable a recorded audio signal to be subjected, on reproduction, to a time lapse or time dilation effect, for use (for example) in language teaching to demonstrate pronunciation of a word to a user. The arrangement disclosed in DE—A1—2 344 125 is not directed to satisfying the need set forth above and does not suggest how that need might be fulfilled.

GB—A—2 034 080 discloses another optical scanning type disc reproducing system of the random access type employing address signals recorded on the disc. More specifically, GB—A—2 034 080 discloses apparatus for reproducing audio information recorded on a rotatable disc in the form of a spiral track or concentric tracks, the apparatus comprising: driving means for rotating the disc; pick-up means including scanning means for scanning a track or tracks on the disc as the disc rotates so as to reproduce the recorded information; transporting means for moving the pick-up means radially of the disc, in a reproduction mode, to allow the scanning means continuously to scan the track or tracks on the disc as the disc rotates; tracking adjustment means operative in the reproduction mode to move the scanning means, with respect to the pick-up means, over a limited extent such that the scanning means can scan the track or tracks continuously over a range of relative positions, which range extends radially of the disc, of the pick-up means and the track or tracks, thereby to enable the recorded information continuously to be reproduced within said range; and jump control means operative when a jump mode is selected to cause the transporting means to move the pick-up means at a speed faster than the speed at which it moves the pick-up means in the reproduction mode so that the scanning means is moved radially of the disc so as to jump from one track to another track or from one turn of a track to another turn of the track. Selection of the jump mode causes the scanning means to move from its current position to another selected position on the disc. The jump mode is selected by inputting a command corresponding to the address of a selected information unit on the disc. If the position of the selected information unit is within the range of the tracking adjustment means (deflection device), so that only a small shift is needed, a signal corresponding to the difference between the address of the selected information unit and the address of the information unit currently being read is used to cause the deflection device to move the scanning means (read unit) to scan the desired position. That is, in the case of a small shift, the jump control means does not change the scanning position by moving the transporting means. If, on the other hand, the position of the selected information unit is outside of the range of the tracking adjustment means (deflection device), so that a large shift is needed, an analog signal representing the selected position is compared with an analog actual position signal and the transporting means (drive arrangement) is caused to move the pick-up means at high speed (coarse positioning) till the difference between the analog signals is substantially zero, whereupon fine positioning is achieved as in the case of a small shift. It is to be noted that the apparatus will function only with a disc having recorded address signals identifying the recorded information units and therefore clearly would not function with a disc not having recorded address signals because there would be no way to select a desired disc position to which the scanning means should be moved. It should be noted also that the jump mode is not a reproduction mode, but is a mode which enables only fast movement from the current position to a selected position. Further, during the jump mode, the tracking adjustment means or deflection device is disabled (by returning to its rest position) during coarse positioning, the deflection device being used only to achieve fine positioning at the selected position. Clearly, the apparatus disclosed in GB—A—2 034 080 is not directed to satisfying the need set forth above and does not suggest how that need might be fulfilled.

According to the present invention there is provided apparatus for reproducing audio information recorded on a rotatable disc in the form of a spiral track or concentric tracks, the apparatus comprising:

driving means for rotating the disc;

pick-up means including scanning means for scanning a track or tracks on the disc as the disc rotates so as to reproduce the recorded information;

transporting means for moving the pick-up means radially of the disc, in a reproduction mode, to allow the scanning means continuously to scan the track or tracks on the disc as the disc rotates;

tracking adjustment means operative in the reproduction mode to move the scanning means, with respect to the pick-up means, over a limited extent such that the scanning means can scan the track or tracks continuously over a range of relative positions, which range extends radially of the disc, of the pick-up means and the track or tracks, thereby to enable the recorded information continuously to be reproduced within said range; and

jump control means operative when a jump mode is selected to cause the transporting means to move the pick-up means at a speed faster than the speed at which it moves the pick-up means in the reproduction mode so that the scanning means is moved radially of the disc so as to jump from one track to another track or from one turn of a track to another turn of the track; characterised in that:

the jump control means is operative when the jump mode is selected to cause the tracking adjustment means to remain operative and periodically to exceed said range so that the tracking adjustment means operates intermittently over said range whereby, while the jump mode is selected, the pick-up means intelligibly reproduces non-adjacent portions of the recorded information; and

means is provided for causing the non-adjacent portions of the recorded information reproduced in the jump mode to be reproduced at a lower level than the reproduction level in the reproduction mode.

Apparatus in accordance with the invention enables the user to monitor at will the recorded audio information at high speed, for example to search for a particular item of information recorded on a disc. When the jump mode is selected, the apparatus intelligibly reproduces sequential bursts of audio information corresponding to the non-adjacent portions mentioned above, skipping the portions between the non-adjacent portions.

The fact that the tracking adjustment means remains operative in the jump mode and is caused periodically to exceed its range enables the recorded information to be reproduced periodically regardless of the sense of movement of the pick-up means in the jump mode. Therefore, if desired, the apparatus can be designed to enable the pick-up means to move in either sense in the jump mode. If the movement is in the same sense as in the reproduction mode, a "cue" (fast forward playback) function like that of a tape recorder is achieved, while if the movement is in the opposite sense a "review" (fast rewind playback) function like that of a tape recorder is achieved.

The means for causing the non-adjacent portions of the recorded information reproduced in the jump mode to be reproduced at a lower level than the reproduction level in the reproduction mode reduces the effect of noise on the reproduced signal in the jump mode.

In an embodiment of the invention described below, the jump control means is operative when the jump mode is selected to cause the transporting means to move the pick-up means continuously at the speed faster than the speed at which it moves the pick-up means in the reproduction mode. In this way, the desired functioning of the apparatus can be achieved in the jump mode by the simple expedient of increasing the speed at which the transporting means moves the pick-up means.

Preferably, in the above-mentioned embodiment, the jump control means is operative when the jump mode is selected to cause the transporting means continuously to move the pick-up means at the speed faster than the speed at which it moves the pick-up means in the reproduction mode, either in the same sense that the transporting means moves during the reproduction mode or in the opposite sense. In this way, both the "cue" and "review" functions mentioned above can be provided in a simple manner.

The invention will now be described by way of example with reference to the accompanying drawings, throughout which like references designate like elements, and in which:

Figure 1 is a schematic diagram showing a previously proposed disc player;

Figure 2 is a partially cross-sectional view showing on an enlarged scale a part of the disc player of Figure 1;

Figure 3 is a block diagram showing a demodulating circuit for a reproduced signal from the disc player of Figure 1;

Figures 4 and 5 are schematic diagrams of part of an embodiment of disc player according to the invention;

Figure 6 is a block diagram showing an example of a demodulating circuit for the embodiment of Figures 4 and 5; and

Figure 7 is a block diagram showing a case where the circuit of Figure 6 is controlled by a central processing unit.

Figure 4 shows the embodiment in the case where a reproduced signal equivalent to that of a cue reproduction mode is obtained from a disc player. The motor 2 is generally rotated at the speed corresponding to the normal reproduction mode, but when a cue control signal is supplied to the control circuit 7 through a terminal 40, the motor 5 is rotated at a higher speed, for example, fifty times the normal speed.

In the case, the pick-up device 3 is moved in the direction indicated by an arrow $a$ at fifty times the normal speed. Because the tracking servo and the focussing servo actions are both applied to the pick-up device 3, the focal point of the objective lens 13 will, up to a point, follow the series of information pits on the DAD 1. However, when the pick-up device 3 arrives at a limit position shown by, for example, a dotted line 3' in Figure 4, the tracking servo has reached the limit of its adjustment, and then the focal point of the objective lens 13 jumps as indicated by an arrow $b$ to a new position from where the tracking servo is again applied to the pick-up device 3.

During the time when the tracking servo is effective, a substantially normal reproduced signal is derived at the output terminal 15 of the pick-up device 3. In other words, the part of the DAD 1 in the range $c$ in Figure 4 is reproduced normally and the range $b$ of the DAD 1 is skipped. Hence the reproduced signal is supplied intermittently.

Figure 5 shows the case of a reproduced signal similar to that of a review reproduction mode. In this case, the motor 2 is generally rotated at the speed corresponding to the normal reproduction mode, but when a review control signal is applied to the control circuit 7 through the terminal 40 the motor 5 is rotated in the reverse direction at a higher speed, for example, fifty times the normal speed.

In this case, the pick-up device 3 is moved in the direction indicated by an arrow $d$ at fifty times the normal speed. Because the tracking servo and the focussing servo actions are applied to the pick-up device 3, the focal point of the lens 13 is moved in the opposite direction following the series of information pits on the DAD 1. When the pick-up device 3 arrives at, for example, a broken line position 3", the tracking servo reaches its limit position. Thus, at that time the focal point of the objective lens 13 jumps as indicated by an arrow $e$ and the tracking servo becomes effective again at the new position.

In this case, at the output terminal 15 of the pick-up device 3, is derived a substantially normal reproduced signal during the periods in which the tracking servo is operative on the pick-up device 3. That is, the range of the DAD 1 indicated by a letter $f$ is reproduced normally, while the range indicated by the arrow $e$ is skipped. Hence the reproduced signal is supplied intermittently.

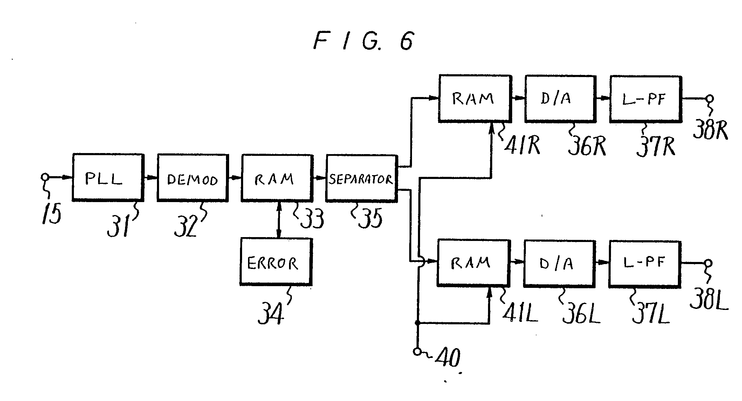

Figure 6 is a block diagram showing an example of the demodulating circuit for the reproduced signal derived from the embodiment of Figures 4 and 5.

In the example of Figure 6, at the final stage of the signal separating circuit 35 are provided random access memories (RAMs) 41R and 41L, respectively. In the normal reproduction mode, the data written therein are read out as they are, while in the cue or review reproduction mode, the least significant bits of the data written therein are removed and the remaining bits thereof are all shifted down one bit position.

Accordingly, in the cue and review reproduction modes, signals in which the data are shifted to the lower order are respectively supplied from the RAMs 41R and 41L to the D/A converters 36R and 36L. Because of the data shift, a reproduced signal attenuated by 6 dB is derived when the shift is one bit position, while if the shift is two bit positions the reproduced signal is attenuated by 12 dB. Thus, during the cue and review reproduction modes, the reproduced signal has a substantially lower level than in the normal reproduction mode, because if this were not so, the reproduced signal would, in those modes, simply be a noise.

Generally, in the case of a compact disc, the range which can be followed up by the tracking servo is about ±300 microns. Also, for a compact disc, the rotational speed of the disc is 200 rpm when the pick-up device is positioned at the outer periphery of the disc, and 500 rpm when the pick-up device is located near the inner periphery of the disc. Thus, in the above-described modes each segment of normal reproduction lasts about 0.65 seconds, and the reproduced sound is sufficient for finding a desired portion of the disc.

It should be noted that even in the review reproduction mode, the intermittently reproduced sound is normal and not, as in previously proposed tape recorders reversed and unintelligible.

The speeds of the cue and review reproduction modes are not of course limited to fifty times the normal speed. Moreover, the ranges over which the tracking servo and the focussing servo are operative on the pick-up device may be expanded. Thus, the periods of normal reproduction may be made longer, so a better reproduced sound is obtained.

The invention can be also supplied to a disc player for reproducing an electrostatic type DAD with no grooves.

The attenuation of the reproduced sounds by means of the RAMs 41R and 41L may additionally be used for sound volume adjustment in the normal reproduction mode. This results in superior sound quality compared with a resistor division method.

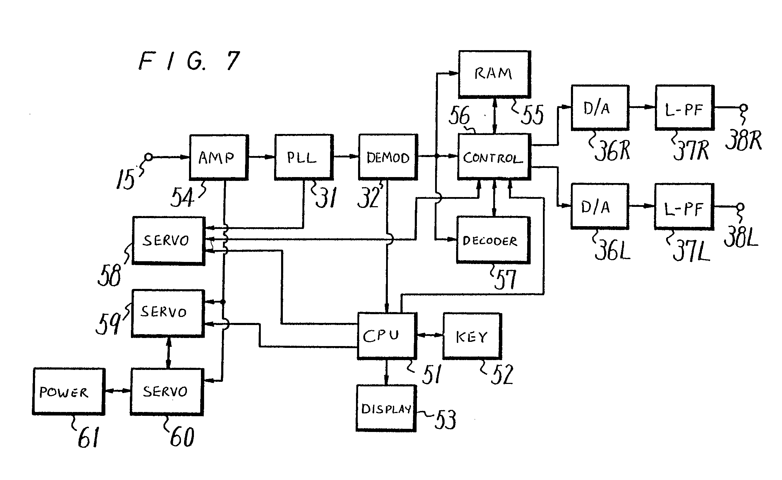

Figure 7 is a block diagram showing an example of the circuit of Figure 6 is controlled by a central processing unit (CPU) 51.

To the CPU 51 are respectively connected an operation key 52 and a display 53 on which the content of the operation and so on are displayed. The signal supplied to the output terminal 15 is supplied through a radio frequency amplifier 54 to the PLL circuit 31. In this figure, a RAM 55, a RAM control circuit 56 and a decoder 57 correspond to the RAM 33, error correcting circuit 34, separating circuit 35 and the RAMs 41R, 41L in Figure 6, and carry out operations similar to those described above in response to the control signal from the CPU 51. In Figure 7, there are also provided a servo circuit 58 for the motor 2, a tracking servo circuit 59, a focussing servo circuit 60 and a power control circuit 61.

With the circuit shown in Figure 7, when the operation key 52 is actuated to select the cue or review reproduction mode, the signals are supplied from the CPU 51 to the servo circuits 58 and 59, and also to the control circuit 56 thereby to attenuate the reproduced sound.

As shown in Figure 7, the servo circuit 58 is supplied with the error output from the PLL circuit 31 and the timing of the reproduced signal from the demodulator 32, in addition to the signal from the CPU 51, to perform the servo operation.

## Claims

1. Apparatus for reproducing audio information recorded on a rotatable disc (1) in the form of a spiral track or concentric tracks, the apparatus comprising:
   driving means (2) for rotating the disc (1);
   pick-up means (3) including scanning means (13) for scanning a track or tracks on the disc (1) as the disc rotates so as to reproduce the recorded information;
   transporting means (4, 5) for moving the pick-up means (3) radially of the disc (1), in a reproduction mode, to allow the scanning means (13) continuously to scan the track or tracks on the disc as the disc rotates;

tracking adjustment means (24a, 24b, etc.) operative in the reproduction mode to move the scanning means (13), with respect to the pick-up means (3), over a limited extent such that the scanning means (13) can scan the track or tracks continuously over a range of relative positions, which range extends radially of the disc (1), of the pick-up means and the track or tracks, thereby to enable the recorded information continuously to be reproduced within said range; and
   jump control means (40, 7) operative when a jump mode is selected to cause the transporting means (4, 5) to move the pick-up means (3) at a speed faster than the speed at which it moves the pick-up means in the reproduction mode so that the scanning means (13) is moved radially of the disc (1) so as to jump from one track to another track or from one turn of a track to another turn of the track; characterised in that:
   the jump control means (40, 7) is operative when the jump mode is selected to cause the tracking adjustment means (24a, 24b, etc.) to remain operative and periodically to exceed said range so that the tracking adjustment means operates intermittently over said range whereby, while the jump mode is selected, the pick-up means (3) intelligibly reproduces non-adjacent portions (c, f) of the recorded information; and
   means (e.g. 41R, 41L) is provided for causing the non-adjacent portions (c, f) of the recorded information reproduced in the jump mode to be reproduced at a lower level than the reproduction level in the reproduction mode.

2. Apparatus according to claim 1, wherein the jump control means (40, 7) is operative when the jump mode is selected to cause the transporting means (4, 5) to move the pick-up means (3) continuously at said faster speed.

3. Apparatus according to claim 2, wherein the jump control means (40, 7) is operative when the jump mode is selected to cause the transporting means (4, 5) continuously to move the pick-up means (3) at said faster speed, either in the same sense that the transporting means moves during the reproduction mode or in the opposite sense.

4. Apparatus according to claim 1, claim 2 or claim 3, wherein the scanning means (13) is an optical scanning means.

## Patentansprüche

1. Gerät zur Wiedergabe einer auf einer rotierbaren Platte (1) in Form einer spiralartigen Spur oder in Form von konzentrischen Spuren aufgezeichneten Audio-Information,
   mit einer Antriebsvorrichtung (2) zum Drehen der Platte (1),
   mit einer Tonabnehmereinrichtung (3), die eine Abtasteinrichtung (13) beinhaltet, mittels derer eine Spur oder Spuren auf der Platte (1) zur Wiedergabe der aufgezeichneten Information abtastbar sind,
   mit einer Transporteinrichtung (4, 5), durch die die Tonabnehmereinrichtung (3) im Wiedergabemodus radial zur Platte (1) derart bewegbar ist, daß die Abtasteinrichtung (13) die Spur oder Spuren auf der Platte (1) kontinuierlich abtastet, wenn die Platte (1) rotiert,

mit einer Spurnachführungseinrichtung (24a, 24b usw),

mittels derer die Abtasteinrichtung (13) im Wiedergabemodus relativ zu der Tonabnehmereinrichtung (3) in einem begrenzten Ausmaß derart bewegbar ist, daß sie (13) die Spur oder Spuren kontinuierlich über einen sich in radialer Richtung der Platte (1) erstreckenden Bereich von Relativpositionen der Tonabnehmereinrichtung (3) und der Spur oder Spuren abtasten kann, so daß die aufgezeichnete Information in diesem Bereich kontinuierlich reproduziert werden kann.

sowie mit einer Sprungsteuerungseinrichtung (40, 7), die bei Wahl eines Sprungmodus derart auf die Transporteinrichtung (4, 5) einwirkt, daß diese die Tonabnehmereinrichtung (3) mit höherer als der dem Wiedergabemodus entsprechenden Geschwindigkeit bewegt, so daß die Abtasteinrichtung (13) radial zu der Platte (1) bewegt wird dabei und von einer Spur zur anderen oder von einer Windung zu einer anderen Windung der Spur zu springt, dadurch gekennzeichnet,

daß die Sprungsteuerungseinrichtung (40, 7) bei Wahl des Sprungmodus bewirkt, daß die Spurnachführungseinrichtung (24a, 24b usw.) wirksam bleibt und den genannten Bereich periodisch überschreitet, so daß sie (24a, 24b usw.) intermittierend über diesen Bereich arbeitet und die Tonabnehmereinrichtung (3) nicht angrenzende Abschnitte (c, f) der aufgezeichneten Information verständlich reproduziert, während der Sprungmodus gewählt ist,

und daß Mittel (z.B. 41R, 41L) vorgesehen sind, die bewirken, daß die nicht angrenzenden Abschnitte (c, f) der in dem Sprungmodus reproduzierten aufgezeichneten Information mit einem niedrigeren Pegel als dem dem Wiedergabemodus entsprechenden Wiedergabepegel reproduziert wird.

2. Gerät nach Anspruch 1, bei dem die Sprungsteuerungseinrichtung (40, 7) bei Wahl der Sprungmodus bewirkt, daß die Transporteinrichtung (4, 5) die Tonabnehmereinrichtung (3) kontinuierlich mit der genannten größeren Geschwindigkeit bewegt.

3. Gerät nach Anspruch 2, bei dem die Sprungsteuerungseinrichtung (40, 7) bei Wahl der Sprungmodus bewirkt, daß die Transporteinrichtung (4, 5) die Tonabnehmereinrichtung (3) kontinuierlich entweder in der dem Wiedergabemodus entsprechend Richtung oder in der entgegengesetzten Richtung mit der genannten größeren Geschwindigkeit bewegt.

4. Gerät nach Anspruch 1, 2 oder 3, bei dem die Abtasteinrichtung (13) eine optische Abtasteinrichtung ist.

**Revendications**

1. Appareil de reproduction d'information sonore enregistrée sur un disque rotatif (1) suivant la forme d'une piste spirale ou de pistes concentriques, l'appareil comprenant:

un moyen d'entraînement (2) servant à faire tourner le disque (1);

un moyen capteur (3) qui comporte un moyen de balayage (13) servant à balayer une piste ou des pistes sur le disque (1) tandis que le disque tourne de façon à reproduire l'information enregistrée;

un moyen de transport (4, 5) servant à déplacer le moyen capteur (3) radialement au disque (1), dans un mode de reproduction, afin de permettre que le moyen de balayage (13) balaye continûment la piste ou les pistes sur le disque tandis que le disque tourne;

un moyen (24a, 24b, etc.) d'ajustement de poursuite de piste ayant pour fonction, dans le mode de reproduction, de déplacer le moyen de balayage (13) par rapport au moyen capteur (3), sur une étendue limitée de façon que le moyen de balayage (13) puisse balayer la piste ou les pistes continûment sur un intervalle de positions relatives, lequel intervalle s'étend radialement au disque (1), du moyen capteur et de la piste, ou des pistes, afin de permettre que l'information enregistrée soit reproduite continûment à l'intérieur dudit intervalle; et

un moyen (40, 7) de commande de saut ayant pour fonction, lorsqu'un mode de saut a été sélectionné, de faire que le moyen de transport (4, 5) déplace le moyen capteur (3) à une vitesse plus grande que la vitesse à laquelle il déplace le moyen capteur dans le mode de reproduction, de sorte que le moyen de balayage (13) se déplace radialement au disque (1) afin de sauter d'une piste à une autre piste, ou d'une spire d'une piste à une autre spire de la piste; caractérisé en ce que:

le moyen de commande de saut (40, 7) a pour fonction, lorsque le mode de saut a été choisi, de faire que le moyen d'ajustement de poursuite de piste (24a, 24b, etc.) reste en service et dépasse périodiquement ledit intervalle de façon que le moyen d'ajustement de poursuite de piste fonctionne par intermittence sur ledit intervalle, si bien que, pendant que le mode de saut est choisi, le moyen capteur (3) reproduit intelligiblement des parties non adjacentes (c, f) de l'information enregistrée; et

un moyen (par exemple 41R, 41L) est prévu qui fait que les parties non adjacentes (c, f) de l'information enregistrée, qui sont reproduites dans le mode de saut, soient reproduites à un niveau inférieur au niveau de reproduction du mode de reproduction.

2. Appareil selon la revendication 1, où le moyen de commande de saut (40, 7) a pour fonction, lorsque le mode de saut a été choisi, de faire que le moyen de transport (4, 5) déplace le moyen capteur (3) continûment à ladite vitesse plus grande.

3. Appareil selon la revendication 2, où le moyen de commande de saut (40, 7) a pour fonction, lorsque le mode de saut a été choisi, de faire que le moyen de transport (4, 5) déplace continûment le moyen capteur (3) à ladite vitesse plus grande, soit dans le sens dans lequel le moyen de transport se déplace pendant le mode de reproduction, soit dans le sens opposé.

4. Appareil selon la revendication 1, 2 ou 3, où le moyen de balayage (13) est un moyen de balayage optique.

0 064 395

F I G. 1

5  4  CONTROL  8  2  6  1

CONTROL  7

F I G. 3

D/A  L-PF  38R
36R  37R

15  PLL  DEMOD  RAM  SEPARA-TOR
31  32  33  35

36L  37L

ERROR  34

D/A  L-PF  38L

1

F I G. 2

FIG. 4

FIG. 5

F I G. 6

F I G. 7